# EUROPÄISCHE PATENTSCHRIFT

(11) **EP 1 250 192 B1**
(45) Veröffentlichungstag und Bekanntmachung des Hinweises auf die Patenterteilung: **02.11.2005**
(21) Anmeldenummer: 00991796.4
(22) Anmeldetag: 21.12.2000
(51) Int. Cl.: B01J 25/00

(54) **DÜNNSCHICHTKATALYSATOREN AUF BASIS VON RANEY-LEGIERUNGEN UND VERFAHREN ZU DEREN HERSTELLUNG**
THIN LAYER CATALYSTS BASED ON RANEY ALLOYS, AND METHOD FOR THE PRODUCTION THEREOF
CATALYSEURS A COUCHE MINCE A BASE D'ALLIAGES DE TYPE RANEY ET PROCEDE PERMETTANT DE LES PRODUIRE

(30) Priorität: 28.12.1999 DE 19963443
(43) Veröffentlichungstag der Anmeldung: 23.10.2002
(73) Patentinhaber: BASF Aktiengesellschaft, 67056 Ludwigshafen (DE)
(72) Erfinder: HAAKE, Mathias, 68161 Mannheim (DE); DÖRSAM, Gerhard, 67061 Ludwigshafen (DE); BOOS, Helmut, 67483 Edesheim (DE)
(74) Vertreter: Isenbruck, Günter
(86) Internationale Anmeldenummer: PCT/EP2000/013104
(87) Internationale Veröffentlichungsnummer: WO 2001/047633

(56) Entgegenhaltungen:
- DE-A- 3 638 520
- DATABASE WPI Section Ch, Week 197413 Derwent Publications Ltd., London, GB; Class J04, AN 1974-23562V XP002171410 & JP 48 025694 A (KASANO K), 3. April 1973 (1973-04-03)
- KAYSER ARMIN ET AL: "Raney-nickel cathodes from Al - Mo - Ni precursor alloys for alkaline water electrolysis" ZEITSCHRIFT FÜR METALLKUNDE, Bd. 83, Nr. 7, Juli 1992 (1992-07), Seiten 565-568, XP002171409

## Beschreibung

Die vorliegende Erfindung betrifft das Gebiet der heterogenen Katalyse. Genauer gesagt, betrifft die vorliegende Erfindung heterogene Katalysatoren auf Basis von Raney-Legierungen, die auf Gestrick- oder Gewebebändern aufgebracht sind.

Sogenannte Raney-Legierungen, insbesondere das sogenannte Raney-Nickel, sind seit langem bekannte, heterogene Katalysatorsysteme. Benutzt werden sie für Hydrierungen oder Dehydrierungen. Bei diesen Legierungen handelt es sich um intermetallische Phasen, beispielsweise, im Falle von Raney-Nickel, solche der Zusammensetzung Ni₂Al₃ oder NiAl₃. Klassisch werden diese Legierungen in Form von feinen Pulvern verwendet, die man in der Lösung, in der die Reaktion durchgeführt wird, suspendiert. Aluminium wird durch Behandlung mit Laugen herausgelöst, wonach ein sehr aktiver Ni-Katalysator erhalten wird.

Insbesondere Raney-Nickel ist ein sehr aktiver Katalysator für Hydrierungen oder Dehydrierungen, jedoch existieren eine Reihe von Nachteilen, die sich aufgrund der Pulverform des Katalysators ergeben. So wird man häufig mit Problemen der Katalysatorverteilung im Reaktor konfrontiert, ebenso sind die Verweilzeiten der Reaktionspartner im Reaktor häufig kritisch. Zudem muß das Pulver nach beendeter Reaktion abgetrennt werden, generell durch Filtration, was eine umständliche und aufwendige Aufarbeitungstechnik erfordert.

Aus diesem Grund wurde es versucht, Festbettkatalysatoren herzustellen, die typische Raney-Nickel-Legierungen aufweisen, die aber nicht in Pulverform vorliegen. Im einfachsten Fall werden dabei Formkörper aus den feinen Suspensionspulvern hergestellt.

Dies ist beispielsweise beschrieben in der US 4,826,799. Dabei wird ein Legierungspulver mit Polyethylen und einem Bindemittel vermischt und in Strangpressen zu Formkörpern gepresst. Im anschließenden Kalzinierungsschritt bilden sich die erforderlichen intermetallischen Phasen, dabei wird auch das Polyethylen abgebrannt. So werden feste Stränge erhalten, die als Hydrierkatalysator geeignet sind, insbesondere für die Hydrierung von Toluol.

Ein anderer Weg liegt darin, Katalysatoren herzustellen, bei denen eine Raney-Legierungs-Oberfläche auf einem Gewebe angebracht ist.

Dies wird beispielsweise in der EP-A-91 028 beschrieben, die Katalysatoren mit Gewebebestandteilen offenbart, die eine integrierte Raney-Nickel-Oberfläche aufweisen. Die Herstellung dieser Katalysatoren erfolgt dadurch, daß nickel-haltige Gewebe mit einer Aluminiumschicht versehen werden, wobei das Aufbringen dieser Aluminiumschicht vorzugsweise durch Eintauchen der erwähnten Gewebe in Aluminiumschmelzen bei 600 bis 700°C erfolgt. Die Aluminiumschicht weist eine Dicke von mindestens 100 µm, vorzugsweise 150 µm, auf. Die Katalysatoren werden verwendet bei der Hydrierung von aromatischen Aminen.

T. A. Liederbach et al. beschreiben in "Commercial Application of Cathode Coatings in Electrolytic Chlorine Cells" die Herstellung von Nickelelektroden in Form von Netzen oder Blechen durch Electroplating. Dabei werden Nickel und Zink elektrolytisch aus einer Lösung abgeschieden, die Ionen dieser Metalle enthält. Elektroden ähnlicher Leistungscharakteristik werden durch das Plasma-Spray-Verfahren von Metallpulvern erhalten. Typische Dicken der katalytisch aktiven Schicht liegen bei 250 bis 300 µm. Derartige Elektroden werden eingesetzt in der Chloralkalielektrolyse.

In der DE-A-37 02 138 werden Elektroden offenbart, die aus Raney-Nickel-Pulvern hergestellt werden. Diese Pulver werden mit einer weiteren Legierung, die als H₂-Speicherlegierung dient, und Polytetrafluorethylen-Pulver innig vermischt. Das erhaltene Gemisch wird durch Pressen und Walzen zu einem zusammenhängenden Netzwerk verarbeitet. Alternativ ist es möglich, die Mischung auf ein Streckmetall aufzupressen. Es werden so Elektroden mit einer Schichtdicke von 1 mm erhalten. Diese Elektroden dienen zur Speicherung sowie zur elektrochemischen Spaltung von Wasserstoff.

Schließlich beschreibt die US 481,440 eine Raney-Nickel-Elektrode, die auf einem Träger aus gaphitisiertem Papier angebracht ist. Die Beschichtung dieses Trägers erfolgt durch Plasmabeschichtung mit Legierungspulver, wodurch Schichten in einer Dicke von 1 bis 10 mm erhalten werden.

Die DE-AS 1 172 650 offenbart ein Verfahren zur Herstellung von Elektroden mit Raney-Katalysatoren. Dabei werden auf eine elektrisch leitende Unterlage die Komponenten einer Raney-Legierung aufgedampft. Die weniger edle Legierungs-Komponente kann mit einer Säure oder Lauge herausgelöst werden. Gegebenenfalls wird die aufgedampfte Schicht noch erhitzt. Als Elektrodenmaterial für die Bedampfung werden Graphitscheiben, Graphitgewebe, Graphitfilz, metallische Sinterkörper, Metalldrahtnetzgewebe genannt. Es können auch keramische Sinterkörper oder poröse Kunststoffe oder andere säure- oder laugenbeständige Gewebe oder Filze verwendet werden. Diese müssten jedoch vorher durch Metallisierung elektrisch leitfähig gemacht werden, beispielsweise durch Aufdampfen eines geeigneten Metalls.

Die im Stand der Technik beschriebenen Raney-Nickel-Katalysatoren zeigen generell eine hohe Hydrieraktivität, weisen aber für einige Verwendungen keine genügende Abriebfestigkeit auf. Dies ist etwa der Fall, wenn farblose, optisch klare Flüssigkeiten hoher Viskosität Hydrierungs- oder auch Dehydrierungsreaktionen unter Einsatz von Raney-Nickel-Katalysatoren unterworfen werden. Dabei läßt sich oft ein Abrieb feststellen, der aus dem Raney-Legierungs-Katalysator stammt. Je nach Art dieses Katalysators kann der Abrieb grob- bis feinkörnig sein, wie dies der Fall bei Pulverkatalysatoren und durch elektrochemische Metallabscheidung erhaltenen Katalysatoren ist. Auch im Fall von 1 mm dünnen Schichten auf Gewebe zeigt sich noch ein Feinstpartikelabrieb, der je nach Produktanforderung nicht tolerierbar ist. Die Aufgabe der vorliegenden Erfindung ist daher die Bereitstellung von Raney-Legierungs-Katalysatoren mit hoher Hydrieraktivität und extrem hoher Abriebfestigkeit auch bei Kontakt mit viskosen Flüssigkeiten.

Diese Aufgabe wird gelöst durch auf einem Dielektrikum als Träger angebrachten Raney-Legierungs-Katalysatoren, dadurch gekennzeichnet, daß die Raney-Legierungsschicht eine Schichtdicke von 0,01 bis 100 µm aufweist und durch Verdampfen des zur Herstellung der Raney-Legierung verwendeten Metalls im Vakuum und gleichmäßiges Aufkondensieren auf den Träger erhältlich ist.

Im allgemeinen liegt der Katalysator als Band, in Form von Folien, Geweben oder Gestricken vor. Die Beschichtung dieser Katalysatorbänder wird dabei vorzugsweise durch Elektronenstrahlverdampfung im Vakuum durchgeführt.

Es können unterschiedliche Metalle verwendet werden, je nachdem, welche Raney-Legierung gewünscht wird. In jedem Fall wird Aluminium benutzt. Das andere Metall, das zur Herstellung einer Raney-Legierung notwendig ist, ist ausgewählt aus der Gruppe bestehend aus Nickel, Kobalt und Kupfer. Vorzugsweise wird Nickel verwendet.

Falls gewünscht, können die Metalle noch zusätzlich ein oder mehrere Promotormetalle enthalten, beispielsweise Eisen, Chrom, Molybdän oder Bor.

Zum Beschichten der Trägermaterialien werden die Aktivkomponente, also Aluminium und das weitere, zur Herstellung der gewünschten Raney-Legierung verwendete Metall, insbesondere Nickel, sowie gewünschtenfalls das Promotormetall im Vakuum verdampft und gleichmäßig auf den Träger kondensiert. Das Verdampfen geschieht dabei mit den üblichen, einem Fachmann bekannten Verfahren, beispielsweise thermisch, durch Elektronenstrahlverdampfung, durch Aufsputtern oder Kombinationen dieser Verfahren. Vorzugsweise geschieht das Beschichten durch Elektronenstrahlverdampfung. Vorzugsweise erfolgt das Aufkondensieren gemäß den Verfahren, die in der US 4,686,202 oder der EP 564 830 offenbart sind.
Die so erhaltenen Schichten des aufgedampften Metalls sind äußerst dünn. Für Aluminium liegen sie im Bereich von 0,1 µm bis 50 µm, vorzugsweise 1 µm bis 10 µm. Die Schichtdicken der anderen, zur Herstellung der Raney-Legierung verwendeten Metalle richten sich nach der Stöchiometrie der aktiven, herzustellenden Raney-Phase. Im Fall von Nickel weist die Schicht dieses Metalls eine Dicke von 0,1 µm bis 10 µm, vorzugsweise 0,5 µm bis 5 µm auf.

Die Beschichtung des Trägers kann derart erfolgen, daß mehrere Schichten der verwendeten Metalle alternierend aufgebracht werden. Auf diese Art werden Gesamtschichtdicken von ca. 100 µm erreicht. Diese Schichtdicken liegen deutlich unter denen, die mit den im Stand der Technik beschriebenen Verfahren erreicht werden können und die bei Werten von etwa 100 bis 15.000 µm liegen. Die erfindungsgemäßen Katalysatoren weisen daher Metallschichten auf, deren Gesamtmasse äußerst niedrig ist, im Bereich von ca. 1 bis 20 g Aluminium/m² Gewebe, bzw. 1 bis 3 g Nickel/m² Gewebe. Diese Werte gelten auch für Kobalt und Kupfer. Die spezifische Gesamtmasse der erhaltenen Metallschichten, aus denen die Raney-Legierung gebildet wird, liegt im Bereich von 0,1 bis 10 g/m² Gewebe.

Als Trägermaterialien werden Dielektrika verwendet.

Die Liste der für den Träger geeigneten Materialien ist wie in Ansprüche 2 bis 4 definiert. Alle nichtmetallischen Materialien werden analog den Metallen in Form von Gestricken, Geweben oder Folien benutzt.

Die nach dem erfindungsgemäßen Verfahren erhaltenen Katalysatorbänder weisen eine aus der entsprechenden Raney-Legierung bestehende Metallschicht auf, die vollständig homogen ist und keine Poren oder Partikel bildet.

Die erwähnten Materialien werden in Form von Folien, Gestricken oder-Geweben als Träger verwendet. Die Träger werden in einer bevorzugten Ausführungsform gewellt oder gesickt, beispielsweise durch Zahnradwalzen. Die erhaltenen Wellungen weisen vorzugsweise ein Modul von 0,5 bis 10 mm auf.

Die nach dem Beschichten erhaltenen Katalysatorbänder müssen noch einer Wärmebehandlung unterzogen werden, um die aktiven Raney-Legierungsphasen ausbilden zu können. Diese Phasen lassen sich im Fall von Raney-Nickel etwa durch die Formeln Ni₂Al₃ oder NiAl₃ ausdrücken. Die Wärmebehandlung wird bei Temperaturen von 500 bis 600°C über 10 bis 60 Minuten und unter einer Inertgasatmosphäre durchgeführt. Als Inertgase lassen sich beispielsweise Stickstoff, Argon oder auch Wasserstoff verwenden.

In einer Variante der Erfindung können fertige Raney-Legierungen, vorzugsweise Raney-Nickel, direkt auf dem Träger aufgedampft werden. Dadurch entfällt der Temperschritt. Vorzugsweise wird die Raney-Nickel-Schicht durch Aufsputtern mit einem Rollcoater hergestellt. Die Schichtdicken der so erhaltenen Raney-Legierungen liegen im Bereich von 1 µm bis 50 µm, vorzugsweise bei 1 µm.

Die erfindungsgemäß erhaltenen, auf Folien, Gewebe- oder Gestrickbändern angebrachten Katalysatoren lassen sich mit den üblichen Techniken zu Packungen bzw. Monolithen konfektionieren, die vorteilhafter Weise in Hydrierungen oder Dehydrierungen verwendet werden können. Aus der Destillations- bzw. Mischungstechnik kennt man eine Vielzahl unterschiedlicher Packungsstrukturen, beispielsweise Kanalstrukturen für den Gas-Flüssigkeitsaustausch. Solche Strukturen sind beispielsweise in der EP-A-482 145 und der WO 97/02890 beschrieben. Derartige monolithische Packungen lassen sich besonders vorteilhaft mit den erfindungsgemäßen Katalysatorgeweben herstellen, da diese sich aufgrund der besonders abriebsstabilen, ultradünnen Schichten mechanisch beliebig verformen lassen.

Die erfindungsgemäßen Trägerkatalysatoren lassen sich einfach aktivieren. Bei niedrigen Temperaturen von vorzugsweise 20°C bis 40°C läßt sich mit 1 bis 20 %iger Lauge, generell NaOH, das Aluminium herauslösen, um die aktive Legierungsphase freizulegen.

Die Behandlung mit Lauge wird nur über einen kurzen Zeitraum durchgeführt, vorzugsweise von 1 bis 20 Minuten.

Aufgrund der Abriebfestigkeit eignen sich die erfindungsgemäßen Trägerkatalysatoren besonders zur Hydrierung oder Dehydrierung von viskosen Flüssigkeiten, bei denen hohe Anforderungen bezüglich der Reinheit und der optischen Klarheit existieren. Es wurde gefunden, daß sich die Katalysatoren nach der vorliegenden Erfindung besonders zur Verbesserung der Farbzahl von mehrwertigen Alkoholen durch Hydrierung eignen. Besonders bevorzugt ist der Einsatz der erfindungsgemäßen Katalysatoren in dem Verfahren, das in der deutschen Anmeldung DE-A-199 63 442 mit dem Titel "Farbzahlverbesserung von mehrwertigen Alkoholen durch Hydrierung", (Anmelderin: BASF AG) offenbart wird.

Die Anmeldung wird nun in den nachfolgenden Beispielen näher erläutert:

### Beispiel 1

Ein Drahtgewebe aus dem Werkstoff Nr. 1.4767 aufweisend eine Maschenweite von 0,18 mm und einen Drahtdurchmesser von 0,112 mm wurde über 3 Stunden bei 900°C an der Luft geglüht. Das derart aufgerauhte Trägergewebe wurde anschließend, nach dem Abkühlen, in einer Elektronenstrahlbedampfungsanlage bei einmal 10⁻⁶ Torr beidseitig zunächst mit einer 0,2 µm dicken Schicht Aluminium und anschließend, unter den gleichen Bedingungen, mit einer 0,044 µm starken Schicht Nickel bedampft. Dieser Vorgang wurde solange kontinuierlich wiederholt, bis eine Gesamtschichtdicke von 1,2 µm erreicht wurde. Nach dem Temperschritt während 3 Stunden unter Stickstoffatmosphäre wurden aus dem Katalysatorgewebe zwei Monolithe von 200 mm Höhe und einem Durchmesser von 21,5 mm geformt. Dazu wurden ein glatter Gewebestreifen und ein Gewebestreifen, der vorher mittels einer Zahnradwalze gewellt worden war, zusammengelegt, aufgerollt und durch Punktschweißen am äußeren Rand gefestigt. Der erhaltene monolithische Raney-Nickel-Dünnschichtkatalysator wurde in ein 60 cm langes Reaktorrohr eingebaut und in diesem über 15 Minuten mit 10 % iger Natronlange behandelt. Die Natronlange wurde daran anschließend durch Waschen mit Wasser entfernt.

### Beispiel 2

Ein Kreislaufreaktor wurde mit 500 g Hydro-dehydrolinalool HDLIN (3,7-Dimethyl-oct-1-in-3-ol) gefüllt. Die Flüssigkeit wurde in Sumpffahrweise unter Rückführung über den nach Beispiel 1 hergestellten Katalysator geleitet, wobei die Querschnittsbelastung 200 m³/m²/h betrug. Gleichzeitig mit dem Flüssigkeitsstrom wurde Wasserstoff bei einem Druck von 1,1 bar im Kreis gefahren. Die Reaktionstemperatur betrug 80°C. Die erhaltenen Resultate sind in der nachfolgenden Tabelle aufgeführt:

| **t/min** | **%HDLIN**^{**1**} | **% HLIN**^{**1**} | **% THLIN**^{**1**} | **Gesamtumsatz HDLIN** |
|---|---|---|---|---|
| 0 | 99,70 | 0,00 | 0,00 | 0,00 |
| 30 | 96,33 | 1,57 | 1,81 | 5,18 |
| 60 | 92,74 | 3,17 | 3,80 | 10,76 |
| 90 | 89,72 | 4,52 | 5,49 | 15,47 |
| 120 | 86,44 | 5,99 | 7,30 | 20,56 |

| | | | | |
|---|---|---|---|---|
| ¹ gaschromatographisch ermittelt aus der Peakfläche HDLIN = Hydro-dehydrolinalool HLIN = Hydrolinalool THLIN = Tetrahydrolinalool | | | | |

Die in der Tabelle wiedergegebenen Resultate zeigen, daß mit dem erfindungsgemäßen Dünnschichtkatalysator insgesamt 50 g/h ungesättigter Alkohole zu Hydrolinalool und Tetrahydrolinalool hydriert werden konnten. Dies entspricht einem Umsatz von ca. 0,33 mol/h bzw. einer Raum-Zeit-Ausbeute von 0,35 kg/L_{Katalysator}/h. Es wurden in dem Versuch 0,112 m² Dünnschichtkatalysator eingesetzt. Aus der spezifischen Katalysatormasse des eingesetzten Raney-Nickels, die 8,6 g/m² betrug, ergibt sich, daß lediglich 0,963 g Raney-Nickel-Legierung im Reaktor vorhanden war. Die spezifische Aktivität ergab sich somit zu 2,9 mol/m²/h. Es konnte keinerlei Abrieb festgestellt werden, weder am Produkt noch im Reaktor.

### Beispiel 3

Ein nach Beispiel 1 erhaltener Raney-Nickel-Dünnschichtkatalysator wurde bei der Hydrierung von 1 kg Trimethylolpropan verwendet, das gemäß der WO 98/28253 erhalten worden war und nach Destillation eine Farbzahl von APHA = 26 aufwies. Die Hydrierung wurde bei 1,1 bar Wasserstoffüberdruck und einer Temperatur von 140°C durchgeführt. Nach 15 Minuten Reaktionszeit konnte eine Verbesserung der Farbzahl auf APHA ≤ 6 festgestellt werden.

## Patentansprüche

1. Raney-Legierungs-Katalysator, enthaltend ein Dielektrikum als Träger und eine darauf angebrachte Raney-Legierungsschicht einer Schichtdicke von 0,01 bis 100 µm, erhältlich durch Verdampfen des zur Herstellung der Raney-Legierung verwendeten Metalls im Vakuum und gleichmäßiges Kondensieren auf den Träger.

2. Katalysator nach Anspruch 1, **dadurch gekennzeichnet, dass** der Träger ausgewählt ist aus in einer sauerstoffhaltigen Atmosphäre getemperten Metallen aus der Gruppe Eisen, Nickel, Kupfer und Edelstählen mit den Werkstoffnummern 1.4767, 1.4401, 2.4610, 1.4765, 1.4847 und 1.4301, Keramik, Aluminiumoxid, Siliciumdioxid, Gewebe aus Asbestersatzstoffen, Kohlefasern, organischen Kunststoffen und Kombinationen dieser Materialien.

3. Katalysator nach Anspruch 2, **dadurch gekennzeichnet, dass** das als Trägermaterial verwendete Metall, das vor dem Aufbringen der Katalysatorschicht in einer sauerstoffhaltigen Atmosphäre bei Temperaturen von 700 bis 1100°C, vorzugsweise 800 bis 1000°C, über einen Zeitraum von 30 Minuten bis 24 Stunden, vorzugsweise 1 Stunde bis 10 Stunden, getempert wurde.

4. Katalysator nach Anspruch 2, **dadurch gekennzeichnet, dass** der organische Kunststoff ausgewählt ist aus Polyamiden, Polyestern, Polyvinylverbindungen, Polyethylen, Polypropylen und Polytetrafluorethylen.

5. Katalysator nach einem der Ansprüche 1 bis 4, **dadurch gekennzeichnet, daß** der Katalysator neben Aluminium als weitere Komponente Nickel, Kobalt und/oder Kupfer, vorzugsweise Nickel, sowie gegebenenfalls ein Promotormetall ausgewählt aus der Gruppe bestehend aus Eisen, Chrom, Molybdän und Bor aufweist.

6. Katalysator nach einem der Ansprüche 1 bis 5, **dadurch gekennzeichnet, daß** die Raney-Legierung eine spezifische Gesamtmasse von 0,1 bis 10 g/m² Gewebe aufweist.

7. Katalysator nach Anspruch 6, **dadurch gekennzeichnet, dass** die spezifische Gesamtmasse bei ca. 1 bis 20g Al/m² Gewebe und 1 bis 3g Ni/m² Gewebe liegt.

8. Katalysator nach einem der Ansprüche 1 bis 7, **dadurch gekennzeichnet, dass** die Schichtdicke des aufgedampften Aluminiums bei 0,1 bis 50 µm, vorzugsweise 1 bis 10 µm, und die des aufgedampften Nickels bei 0,1 bis 10 µm, vorzugsweise 0,5 bis 5 µm liegt.

9. Katalysator nach einem der Ansprüche 1 bis 8, **dadurch gekennzeichnet, dass** das Beschichten thermisch, durch Elektronenstrahlverdampfen, durch Aufsputtern oder eine Kombination dieser Verfahren geschieht.

10. Katalysator nach Anspruch 9, **dadurch gekennzeichnet, dass** das Beschichten durch Elektronenstrahlverdampfen geschieht.

11. Katalysator nach einem der Ansprüche 1 bis 10, in Form eines Katalysatorbands oder einer aus diesem Katalysatorband hergestellten monolithischen Katalysatorpackung.

12. Verfahren zur Aktivierung eines Katalysators nach einem der Ansprüche 1 bis 11, **dadurch gekennzeichnet, daß** der Katalysator bei niedrigen Temperaturen, vorzugsweise 20 bis 40°C, über einen kurzen Zeitraum, vorzugsweise 1 bis 20 min, mit einer geeigneten Base ausgelaugt wird.

13. Verfahren zur Herstellung eines Katalysators nach einem der Ansprüche 1 bis 11, **dadurch gekennzeichnet, daß** die verwendeten Metalle alternierend durch Verdampfen im Vakuum und gleichmäßiges Kondensieren auf den Träger aufgebracht, nach dem Aufbringen einer Wärmebehandlung unterzogen werden und gegebenenfalls die derart erhaltenen Katalysatoren in die gewünschte Form gebracht werden.

14. Verfahren zur Herstellung eines Katalysators nach einem der Ansprüche 1 bis 11, **dadurch gekennzeichnet, daß** eine fertige Raney-Legierung im Vakuum verdampft und durch gleichmäßiges Kondensieren auf den Träger aufgebracht wird.

15. Verfahren nach Anspruch 13 oder 14, **dadurch gekennzeichnet, daß** das Verdampfen thermisch, durch Elektronenstrahlverdampfung, durch Aufsputtern oder eine Kombination dieser Verfahren, vorzugsweise durch Elektronenstrahlverdampfung, geschieht.

## Claims

1. A Raney alloy catalyst comprising a dielectric as support and a Raney alloy layer applied thereto and having a thickness of 0.01 to 100 µm, obtainable by vaporizing the metal used to prepare the Raney alloy under reduced pressure and condensing it uniformly onto the support.

2. A catalyst as claimed in claim 1, **characterized in that** the support is selected from metals tempered in an oxygen-containing atmosphere and selected from the group consisting of iron, nickel, copper and stainless steels of material numbers 1.4767, 1.4401, 2.4610, 1.4765, 1.4847 and 1.4301, ceramic, aluminum oxide, silicon dioxide, fabrics made of asbestos substitutes, carbon fibers, organic plastics and combinations of these materials.

3. A catalyst as claimed in claim 2, **characterized in that**, prior to application of the catalyst layer, the metal used as the support material was tempered in an oxygen-containing atmosphere at temperatures of 700 to 1100°C, preferably 800 to 1000°C, over a period of 30 minutes to 24 hours, preferably 1 hour to 10 hours.

4. A catalyst as claimed in claim 2, **characterized in that** the organic plastic is selected from polyamides, polyesters, polyvinyl compounds, polyethylene, polypropylene and polytetrafluoroethylene.

5. A catalyst as claimed in any of claims 1 to 4 which, in addition to aluminum, contains nickel, cobalt and/or copper, preferably nickel, as other components, optionally together with a promoter metal selected from the group consisting of iron, chromium, molybdenum and boron.

6. A catalyst as claimed in any of claims 1 to 5, **characterized in that** the Raney alloy has a specific total weight of 0.1 to 10 g/m² fabric.

7. A catalyst as claimed in claim 6, **characterized in that** the specific total weight is from approx. 1 to 20 g Al/m² fabric and 1 to 3 g Ni/m² fabric.

8. A catalyst as claimed in any of claims 1 to 7, **characterized in that** the thickness of the layer of vapor-deposited aluminum is 0.1 to 50 µm, preferably 1 to 10 µm, and that of the vapor-deposited nickel is 0.1 to 10 µm, preferably 0.5 to 5 µm.

9. A catalyst as claimed in any of claims 1 to 8, **characterized in that** the coating is effected by means of heat, by electron beam vaporization, by sputtering or by a combination of these methods.

10. A catalyst as claimed in claim 9, **characterized in that** the coating is effected by electron beam vaporization.

11. A catalyst as claimed in any of claims 1 to 10 in the form of a catalyst strip or a monolithic catalyst packing produced from this catalyst strip.

12. A process for the activation of a catalyst as claimed in any of claims 1 to 11, **characterized in that** the catalyst is extracted with a suitable base at low temperatures, preferably 20 to 40°C, over a short period, preferably 1 to 20 min.

13. A process for the preparation of a catalyst as claimed in any of claims 1 to 11, **characterized in that** the metals used are applied alternately to the support by vaporization under reduced pressure and uniform condensing, and after application undergo a heat treatment and the catalysts obtained in this way are optionally transformed to the desired shape.

14. A process for the preparation of a catalyst as claimed in any of claims 1 to 11, **characterized in that** a finished Raney alloy is applied to the support by vaporization under reduced pressure and uniform condensing.

15. A process as claimed in claim 13 or 14, **characterized in that** the vaporization is effected by means of heat, by electron beam vaporization, by sputtering or by a combination of these methods, preferably by electron beam vaporization.

## Revendications

1. Catalyseur d'alliage de Raney contenant un diélectrique comme support et une couche d'alliage de Raney appliquée dessus d'une épaisseur de couche de 0,01 à 100 µm, que l'on peut obtenir par évaporation sous vide du métal utilisé pour la préparation de l'alliage de Raney et condensation uniforme sur le support.

2. Catalyseur suivant la revendication 1, **caractérisé en ce que** le support est choisi parmi des métaux recuits dans une atmosphère contenant de l'oxygène du groupe du fer, du nickel, du cuivre et des aciers nobles portant les numéros de matériaux 1.4767, 1.4401, 2.4610, 1.4765, 1.4847 et 1.4301, de la céramique, de l'oxyde d'aluminium, du dioxyde de silicium, des tissus en succédanés d'amiante, des fibres de carbone, des substances synthétiques organiques et des combinaisons de ces matières.

3. Catalyseur suivant la revendication 2, **caractérisé en ce que** le métal utilisé comme matière de support a été, avant l'application de la couche de catalyseur, recuit dans une atmosphère contenant de l'oxygène à des températures de 700 à 1100°C, de préférence de 800 à 1000°C, pendant un espace de temps de 30 minutes à 24 heures, de préférence de 1 heure à 10 heures.

4. Catalyseur suivant la revendication 2, **caractérisé en ce que** la substance synthétique organique est choisie parmi des polyamides, des polyesters, des composés polyvinyliques, du polyéthylène, du polypropylène et du polytétrafluoroéthylène.

5. Catalyseur suivant l'une des revendications 1 à 4, **caractérisé en ce que**, outre de l'aluminium, le catalyseur présente du nickel, du cobalt et/ou du cuivre, de préférence du nickel, comme autres composants, ainsi qu'éventuellement un métal promoteur choisi parmi le groupe constitué du fer, du chrome, du molybdène et du bore.

6. Catalyseur suivant l'une des revendications 1 à 5, **caractérisé en ce que** l'alliage de Raney présente une masse spécifique globale de 0,1 à 10 g/m² de tissu.

7. Catalyseur suivant la revendication 6, **caractérisé en ce que** la masse spécifique globale est d'environ 1 à 20 g d'Al/m² de tissu et de 1 à 3 g de Ni/m² de tissu.

8. Catalyseur suivant l'une des revendications 1 à 7, **caractérisé en ce que** l'épaisseur de couche de l'aluminium évaporé est de 0,1 à 50 µm, de préférence de 1 à 10 µm, et celle du nickel évaporé est de 0,1 à 10 µm, de préférence de 0,5 à 5 µm.

9. Catalyseur suivant l'une des revendications 1 à 8, **caractérisé en ce que** l'application de couche a lieu par voie thermique, par évaporation par bombardement électronique, par pulvérisation ou par une combinaison de ces procédés.

10. Catalyseur suivant la revendication 9, **caractérisé en ce que** l'application de couche a lieu par évaporation par bombardement électronique.

11. Catalyseur suivant l'une des revendications 1 à 10, sous la forme d'une bande de catalyseur ou d'un garnissage monolithique de catalyseur préparé à partir de cette bande de catalyseur.

12. Procédé d'activation d'un catalyseur suivant l'une des revendications 1 à 11, **caractérisé en ce que** le catalyseur est, à des températures basses, de préférence de 20 à 40°C, lessivé par une base appropriée pendant une courte période, de préférence de 1 à 20 minutes.

13. Procédé de préparation d'un catalyseur suivant l'une des revendications 1 à 11, **caractérisé en ce que** les métaux utilisés sont appliqués en alternance par évaporation sous vide et condensation uniforme sur le support, **en ce qu'**ils sont soumis à un traitement thermique après l'application et **en ce qu'**éventuellement les catalyseurs ainsi obtenus sont amenés sous la forme souhaitée.

14. Procédé de préparation d'un catalyseur suivant l'une des revendications 1 à 11, **caractérisé en ce qu'**un alliage de Raney fini est évaporé sous vide et est appliqué sur le support par condensation uniforme.

15. Procédé suivant la revendication 13 ou 14, **caractérisé en ce que** l'évaporation a lieu par voie thermique, par évaporation par bombardement électronique, par pulvérisation ou par une combinaison de ces procédés, de préférence par évaporation par bombardement électronique.
